# EUROPEAN PATENT APPLICATION

(11) **EP 3 683 492 A1**
(43) Date of publication of application: **22.07.2020**
(21) Application number: 17924688.9
(22) Date of filing: 04.12.2017
(51) Int. Cl.: F17D 5/02, G01N 27/82

(54) **DYNAMIC MAGNETIC DETECTION PROBE AND ELECTROMAGNETIC ARRAY CONTROL METHOD**

(30) Priority: 11.09.2017 CN 201710814102
(71) Applicant: Tsinghua University, Haidian District Beijing 100084 (CN)
(72) Inventor: GUO, Jingbo, Beijing 100084 (CN); HU, Tiehua, Beijing 100084 (CN); PIAO, Guanyu, Beijing 100084 (CN)
(74) Representative: Balder IP Law, S.L.
(86) International application number: PCT/CN2017/114486
(87) International publication number: WO 2019/047397

(57) **Abstract**

A dynamic magnetic field detection probe (10) and an electromagnetic array control method. The dynamic magnetic field detection probe (10) includes a dynamic magnetic field detection module (200), a master controller module (300), and a communication module (400). The master controller module (300) is electrically connected to the dynamic magnetic field detection module (200). The communication module (400) is connected to the master controller module (300) by communication. The master controller module (300) transmits acquired data to the communication module (400). The dynamic magnetic field detection probe (10) is capable of detecting small-sized defects and has high precision.

## Description

### RELATED APPLICATION

The present disclosure claims priority to the Chinese application No. 2017108141020, entitled "Dynamic Magnetic Field Detection Probe and Electromagnetic Array Control Method", filed on September 11, 2017, the content of which is herein incorporated by reference in their entirety.

### TECHNICAL FIELD

The present application relates to the field of electronic information technology, and in particular, to a dynamic magnetic field detection probe and an electromagnetic array control method.

### BACKGROUND

The industrialization and practicality of an interior detection technology and equipment for oil and gas pipeline defects are of great significance.

Magnetic flux leakage detection is the interior detection technology for pipeline defects that has been developed at home and abroad. In the magnetic flux leakage detection technology, a constant magnetic field generated by a permanent magnet magnetizes a pipe wall in a detection area, and the magnetic flux leakage signal generated by a defect in the pipe wall is detected by a magnetic field sensing element such as a Hall sensor, then the pipeline defect information is identified based on the characteristics of the magnetic flux leakage signal.

The magnetic flux leakage detection generally can only detect a large-sized defect such as corrosion, but has poor detection accuracy for a small-sized defect such as a crack.

### SUMMARY

Based on this, it is necessary to provide a dynamic magnetic field detection probe and an electromagnetic array control method having high accuracy of detecting small-sized defects. The dynamic magnetic field detection probe includes:
a dynamic magnetic field detection module, configured to acquire a magnetic signal;
a master controller module, electrically connected to the dynamic magnetic field detection module and configured to control working timing of the dynamic magnetic field detection module; and
a communication module, connected to the master controller module through communication, wherein the master controller module transmits acquired data to the communication module.

In an embodiment, the dynamic magnetic field detection module includes:
a magnetic field excitation coil and a differential receiving coil;
wherein the magnetic field excitation coil conducts a pulse current, and the differential receiving coil receives a magnetic field signal at a falling edge of the pulse current.

In an embodiment, the dynamic magnetic field excitation coil includes a multi-layered spiral wire wound in a PCB circuit board; and
the differential receiving coil includes forward and backward differential multi-layered spiral wires wound in a PCB circuit board.

In an embodiment, the dynamic magnetic field detection module further includes a high frequency pulse current generator, and the high frequency pulse current generator is electrically connected to the magnetic field excitation coil, so that the magnetic field excitation coil conducts the high frequency pulse current.

In an embodiment, the high frequency pulse current generator includes a metal-oxide-semiconductor field-effect transistor which is configured to generate the high frequency pulse current.

In an embodiment, the master controller module includes a CPLD programmable logic device, a clock chip, a reset chip, and a JTAG program configuration interface; the clock chip, the reset chip, and the JTAG program configuration interface are electrically connected to the CPLD programmable logic device respectively.

In an embodiment, the CPLD programmable logic device includes a timing control unit and a data transmission control unit; the timing control unit and the data transmission control unit are electrically connected to the communication module, and are configured to send timing of acquiring data to the communication module and to drive the communication module.

In an embodiment, the dynamic magnetic field detection probe further includes a Hilbert transform module; the Hilbert transform module includes a Hilbert transformer electrically connected to the dynamic magnetic field detection module, and is configured to perform a Hilbert transform on the magnetic signal.

In an embodiment, the Hilbert transform module further includes:
a first low-noise amplifier provided between the Hilbert transformer and the dynamic magnetic field detection module;
a second low-noise amplifier connected to a signal output terminal of the Hilbert transformer; and
a low-pass filter provided between the Hilbert transformer and the second low-noise amplifier.

In an embodiment, the dynamic magnetic field detection probe further includes a magnetic flux leakage detection device electrically connected to the master controller module; the magnetic flux leakage detection device is a multi-channel Hall chip array; Hall chips in each channel include three Hall chips arranged vertically in an X axis, a Y axis, and a Z axis, and are configured to detect spatial magnetic leakage signals.

The present application further includes an electromagnetic array control method, including:
providing a plurality of magnetic field detection probes of any one mentioned above; and
controlling the magnetic field detection probes via a sequential control array by a sequential control method through a control system.

The dynamic magnetic field detection probe provided by the present application can detect the defect information exhibited when the object to be tested has a small-sized defect. The present application can detect small-sized defects and has high precision.

### BRIEF DESCRIPTION OF THE DRAWINGS

FIG. 1 is a schematic structural diagram of an embodiment of a magnetic field detection probe;
FIG. 2 is a schematic structural diagram of another embodiment of the magnetic field detection probe;
FIG. 3 is an acquiring timing diagram of an embodiment of the magnetic field detection probe;
FIG. 4 is a software flowchart of an embodiment of the magnetic field detection probe;
FIG. 5 is a three-dimensional waveform diagram of an actually detected X-axis magnetic flux leakage signal according to an embodiment of the magnetic field detection probe;
FIG. 6 is a three-dimensional waveform diagram of an actually detected Y-axis magnetic flux leakage signal according to an embodiment of the magnetic field detection probe;
FIG. 7 is a three-dimensional waveform diagram of an actually detected Z-axis magnetic flux leakage signal according to an embodiment of the magnetic field detection probe;
FIG. 8 is a waveform diagram of an actually detected dynamic magnetic signal of an outer surface defect according to an embodiment of the magnetic field detection probe;
FIG. 9 is a waveform diagram of an actually detected dynamic magnetic signal of an inner surface defect according to an embodiment of the magnetic field detection probe;
FIG. 10 is a schematic diagram of a sequential control array according to an embodiment of an electromagnetic array control method.

### DETAILED DESCRIPTION OF THE EMBODIMENTS

In order to make the objectives, technical solutions, and advantages of the present application clearer and understood, the technical solutions of the present application will be further described in detail below with reference to the accompanying drawings and embodiments. It should be understood that the specific embodiments described herein are only used to explain the technical solutions of the present application, but not intended to limit the technical solutions of the present application.

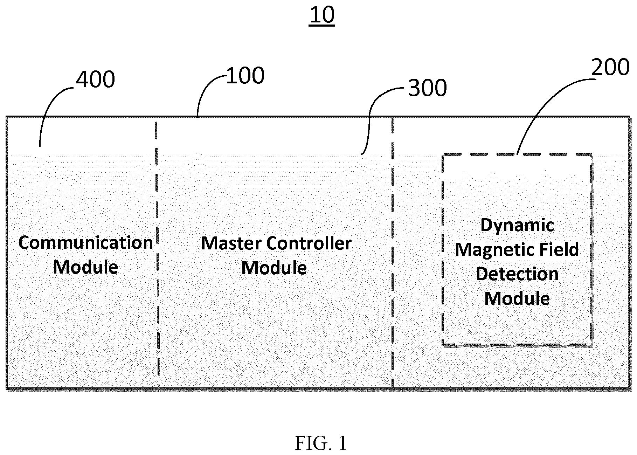

Referring to FIG. 1, an embodiment of the present application provides a magnetic field detection probe 10, which includes: a dynamic magnetic field detection module 200, a master controller module 300, and a communication module 400. The master controller module 300 is electrically connected to the dynamic magnetic field detection module 200. The communication module 400 is connected to the master controller module 300 through communication, and the master controller module 300 transmits acquired data to the communication module 400. The magnetic field detection probe 10 further includes a housing 100. The dynamic magnetic field detection module 200, the master controller module 300, and the communication module 400 are disposed inside the housing 100.

When detecting an oil pipeline, the magnetic field detection probe 10 of the present application moves within the oil pipeline to perform a magnetic field detection. The dynamic magnetic field detection module 200 is configured to acquire a magnetic signal. The magnetic signal is a magnetic field signal at a position where the magnetic field detection probe 10 is located.

The dynamic magnetic field detection probe 10 of the present embodiment, by using the dynamic magnetic field detection module 200, can detect defect information exhibited when the object to be tested has a small-sized defect. A probe of the dynamic magnetic field detection module 200 moves, and is locally induced to obtain evolution of the magnetic field. Therefore, the present application can detect small-sized defects and has high precision.

In an embodiment, the dynamic magnetic field detection module 200 includes a magnetic field excitation coil 210 and a differential receiving coil 220. The magnetic field excitation coil 210 conducts a pulse current, and the differential receiving coil 220 receives a magnetic field signal at a falling edge of the pulse current, to obtain a signal with a higher signal-to-noise ratio. In an embodiment, the dynamic magnetic field excitation coil 210 includes a multi-layered spiral wire wound in a PCB circuit board. The differential receiving coil 220 includes forward and backward differential multi-layered spiral wires wound in a PCB circuit board. The multi-layered spiral wire can effectively eliminate interference of magnetic signals and improve the signal-to-noise ratio of magnetic signals.

In an embodiment, the dynamic magnetic field detection module 200 further includes a high frequency pulse current generator 230. The high frequency pulse current generator 230 is electrically connected to the magnetic field excitation coil 210, so that the magnetic field excitation coil 210 conducts the high frequency pulse current. In an embodiment, the high frequency pulse current generator 230 includes a metal-oxide-semiconductor field-effect transistor, and is configured to generate the high frequency pulse current.

In an embodiment, the master controller module 300 can include a CPLD programmable logic device, a clock chip, a reset chip, and a JTAG program configuration interface. The clock chip, the reset chip, and the JTAG program configuration interface are electrically connected to the CPLD programmable logic device respectively.

In an embodiment, the CPLD programmable logic device includes a timing control unit and a data transmission control unit. The timing control unit and the data transmission control unit are electrically connected to the communication module and configured to send timing of acquiring data to the communication module and to drive the communication module.

In an embodiment, the communication module 400 includes a differential duplex communication chip, and has a long transmission distance and a transmission speed up to 50Mbps, which can effectively resist external electromagnetic interference.

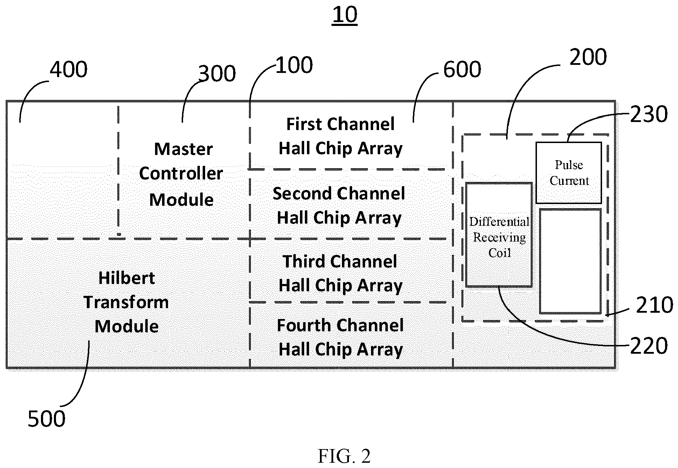

Referring to FIG. 2, in an embodiment, the dynamic magnetic field detection probe 10 further includes a Hilbert transform module 500. The Hilbert transform module 500 includes a Hilbert transformer electrically connected to the dynamic magnetic field detection module 200, and is configured to perform a Hilbert transform on the magnetic signal. The use of the Hilbert transform module 400 improves the signal-to-noise ratio of the magnetic signal output by the dynamic magnetic field detection module 200, extends the observation time of the magnetic signal, and converts analog information.

In an embodiment, the Hilbert transform module 500 further includes:
a first low-noise amplifier provided between the Hilbert transformer and the dynamic magnetic field detection module 200;
a second low-noise amplifier connected to a signal output terminal of the Hilbert transformer;
a low-pass filter provided between the Hilbert transformer and the second low-noise amplifier.

The first low-noise amplifier receives a magnetic signal output from the dynamic magnetic field detection module 200 and amplifies the magnetic signal. The amplified magnetic signal is input to the Hilbert transformer for Hilbert transformation. The magnetic signal transformed by the Hilbert transformer is input to the low-pass filter, to eliminate high-frequency noise in the magnetic signal. Then the magnetic signal, from which the high-frequency noise is eliminated, is amplified by the second low-noise amplifier.

In an embodiment, the dynamic magnetic field detection probe further includes a magnetic flux leakage detection device 600. The magnetic flux leakage detection device 600 is electrically connected to the master controller module 300. The magnetic flux leakage detection device 600 is a multi-channel Hall chip array. Hall chips in each channel of the multi-channel Hall chip array include three Hall chips arranged vertically in the X axis, Y axis, and Z axis, and are configured to detect spatial magnetic leakage signals. As shown in FIG. 2, in an embodiment, the multi-channel Hall chip array is a four-channel Hall chip array. The magnetic flux leakage detection device 600 is provided together with the dynamic magnetic field detection module 200, namely, a dynamic magnetic field detection and a magnetic leakage detection are integrated, so that the magnetic field detection probe 10 can detect not only large-sized defects but also small-sized defects in the pipeline to be tested, thereby improving the application scope and accuracy, and expanding the application of the magnetic field detection probe 10.

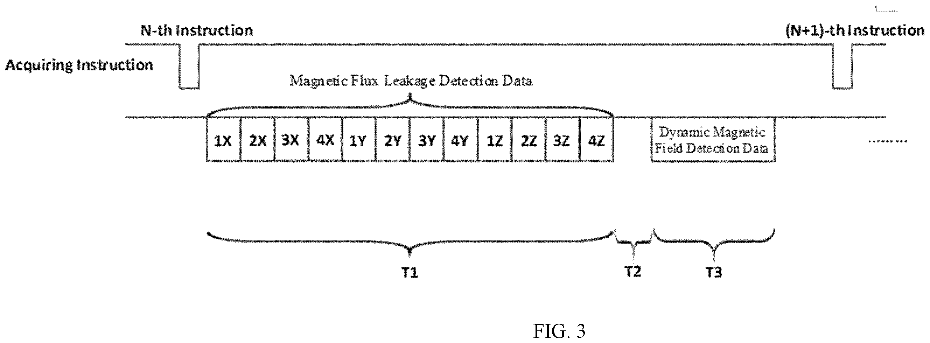

FIG. 3 is a timing control diagram adopted by the master controller module 300 of an embodiment.

Please refer to FIG. 3, after the falling edge trigger of the N-th acquisition instruction ends, the master controller module 300 first controls the magnetic flux leakage detection device 600 to perform acquisition, to perform channel selection and to digitalize the analog signals, and transmits the digital signals to the master controller module 300. Then the master controller module 300 transmits the acquired data to a data concentration device through the communication module 400. The magnetic flux leakage detection data are sampled according to a strict sampling order as follows: an X-axis Hall chip of a first channel samples firstly, then an X-axis Hall chip of a second channel samples, and so on; and after the four-channel X-axis Hall chips finish sampling, the four-channel Y-axis Hall chips start sampling, and finally the four-channel Z-axis Hall chips finish sampling. A curve graph of data acquired by the above means for each channel is drawn via computer analysis software according to the above order as well. The acquiring, sampling, and transmitting of the magnetic flux leakage detection data occupies a time length T1 in total. The clock operating frequency of the probe 10 can be 20 -50 MHz, then the time length T1 can be 80 -100 µs.

Further, there can be an idle time gap between acquiring the magnetic flux leakage detection data and the dynamic magnetic field detection data, so as to prevent interference between the acquisition operations of the two modules, and to ensure the quality of the acquired data. The idle time gap can be T2 = 10µs.

The acquiring of the dynamic magnetic field detection data is as follows: after the dynamic magnetic field detection module 200 makes the dynamic magnetic field excitation coil conduct the pulse current, the differential receiving coil 220 acquires a dynamic magnetic field signal when the pulse current is on a falling edge. The dynamic magnetic field signal is converted by the Hilbert transform module 500, to obtain a Hilbert transform signals; and finally the data are sent to the data concentration device by the communication module 400. When the pulse current is on a falling edge, the differential receiving coil 220 acquires the dynamic magnetic field signal, so that the signal-to-noise ratio of the acquired magnetic field signal is increased. The dynamic magnetic field detection data occupy a time length T3, and the clock operating frequency of the probe can be 50MHz, then the time length T3 can be 50µs. The total duration of the working timing of the probe is T1 + T2 + T3 = 160µs. An interior detecting robot inside the oil and gas pipeline can adopt a mileage trigger mode with a distance interval of 2mm, and when the interior detecting robot moves at a speed of 12 m/s, it will generate an acquiring instruction with a period of about 166µs. Duration of the working timing of the interior detection probe provided by the present application is about 160µs, which is less than the sampling period of 166µs. Therefore the interior detection probe of the oil and gas pipeline provided by the present application, which is based on the electromagnetic array control technology and moves at a speed up to 12 m/s, can stably complete the detection of metal defects inside or outside the oil and gas pipeline, but a traditional probe moving at such a high speed cannot perform detection stably.

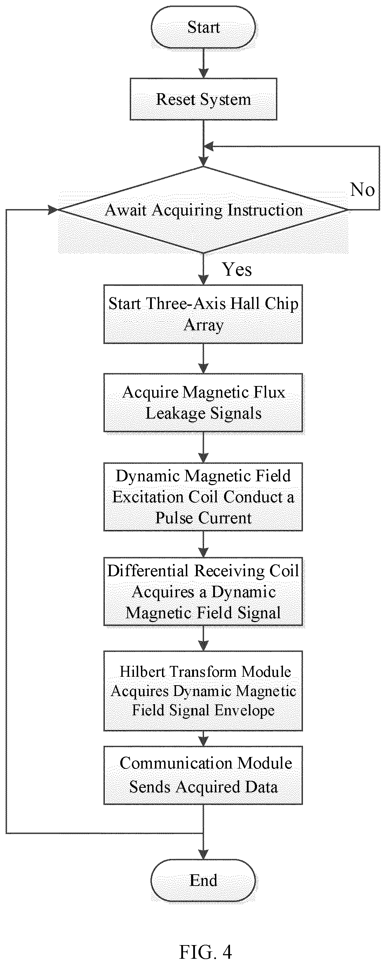

In an embodiment, FIG. 4 shows a working flow chart of the magnetic field detection probe 10. First, the magnetic field detection probe 10 is reset. After receiving an acquiring instruction, the master controller module 300 starts the magnetic flux leakage detection device 600 to perform magnetic flux leakage detection. After the magnetic leakage detection is completed, the dynamic magnetic field detection module 200 is started. The dynamic magnetic field excitation coil 210 conducts a pulse current. At a falling edge of the pulse current, the differential receiving coil 220 acquires the dynamic magnetic field signal, and the waveform polarity of the Hilbert transform of the dynamic magnetic field signal is extracted by the Hilbert transform module 500. Finally, the communication module 400 sends the acquired magnetic flux leakage signal and dynamic magnetic field signal.

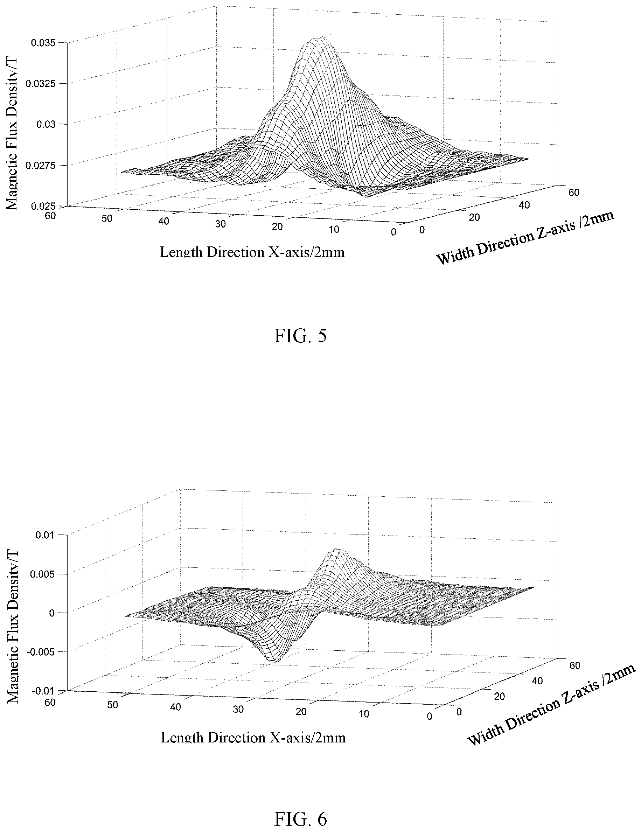

FIG. 5, FIG. 6 and FIG. 7 respectively show the X, Y and Z multi-channel magnetic flux leakage data curves when an embodiment of the magnetic field detection probe 10 passes by a defect with a radius of 10 mm and a depth of 5 mm. The X magnetic flux leakage data waveform shows a unimodal distribution, and the Y and Z magnetic flux leakage data waveforms both show bimodal distributions.

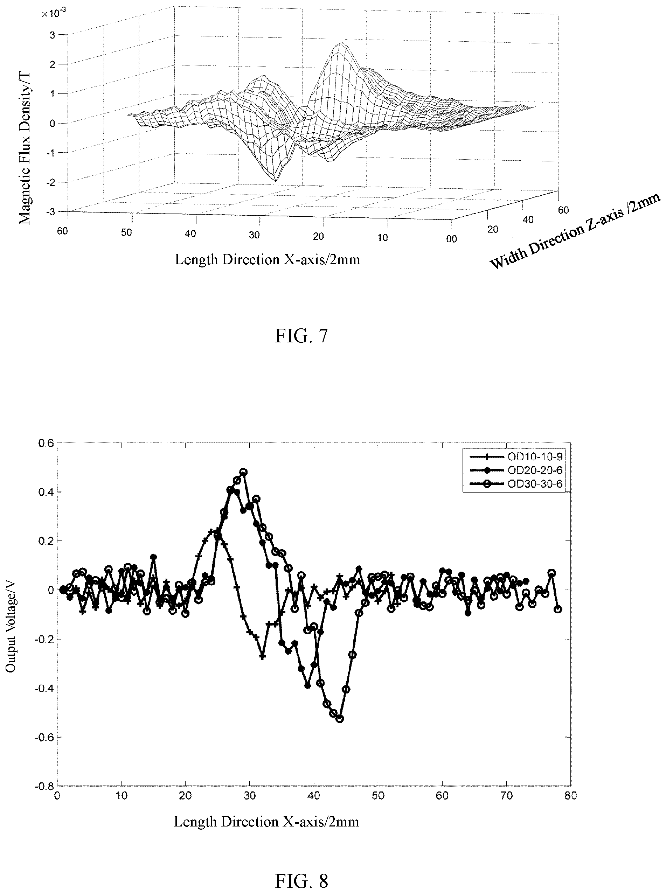

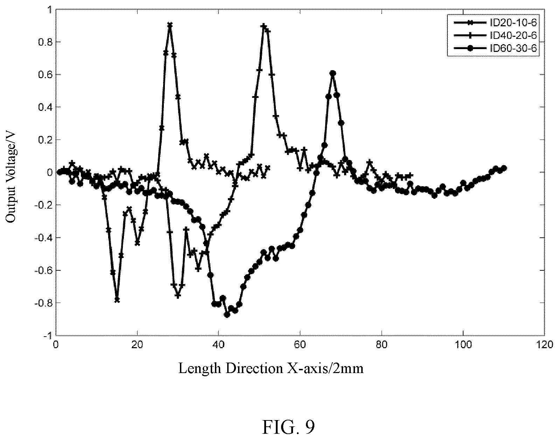

In FIGS. 8 and 9, the label "ID" indicates an inner surface; the label "OD" indicates an outer surface; and the label "ID20-20-6" indicates an inner surface defect with a length of 20 mm, a width of 20 mm, and a depth of 6 mm. FIG. 8 shows a dynamic magnetic field response when the defect is on the outer surface. FIG. 9 shows the dynamic magnetic field response when the defect is on the inner surface. When the probe passes by the defect on the outer surface, the waveform polarity of the Hilbert transform of the dynamic magnetic field signal is positive first, and then negative. Conversely, when the probe passes by the defect on the inner surface, the waveform polarity of the Hilbert transform of the dynamic magnetic field signal is negative first, and then positive. The actual curves show consistency with the above-described contents of the application. The consistency indicates that the interior detecting probe of the oil and gas pipeline provided by the present application, which is based on the electromagnetic array control technology, can distinguish the metal defects distributed on the inner wall from those on the outer wall by the waveform polarity of the Hilbert transform of the dynamic magnetic field signal.

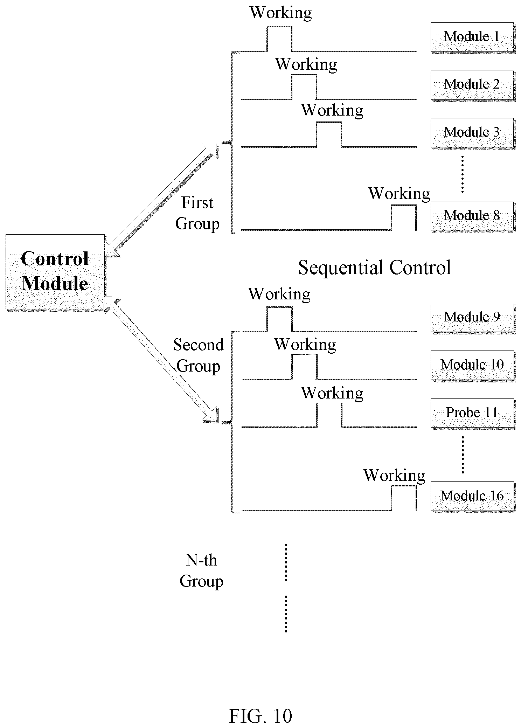

Referring to FIG. 10, an embodiment of the present application further provides an electromagnetic array control method, including:
at step S100', provide a plurality of magnetic field detection probes of any one mentioned above;
at step S200', control the magnetic field detection probes via a sequential control array by a sequential control method through a control system.

Specifically, a module 1 shown in FIG. 10 corresponds to one magnetic field detection probe 10, that is, an entire detection system includes a plurality of magnetic field detection probes 10. A control module is a control system. The control module assigns a specific acquiring timing to control each of the magnetic field detection probes 10 by a sequential control method. In an embodiment, multiple modules can be grouped and controlled separately by the sequential control method. The sequential control array in the electromagnetic array control method refers to: each module is sequentially started to work by adopting a sequential trigger mode and by rationally assigning the working timing, to reduce the instantaneous working current of the system, and to high efficiently complete the acquisition of all modules within an enough short time window, so that the whole detection system has high acquisition efficiency, low power consumption, and good security.

In several embodiments provided by the present application, it should be understood that the related devices and method disclosed may be implemented in other ways. For example, the device embodiments described above are only illustrative. For example, the division of the module or unit is only a logical function division. In actual implementation, there can be another division manner. For example, multiple units or components can be combined or either be integrated into another system, or some features can be ignored or not be implemented. In addition, the mutual coupling, direct coupling or communication connection illustrated or discussed herein may be implemented through indirect coupling or communication connection between interfaces, devices or units, and may be electronic, mechanic, or in other forms.

The units described as separate components may be physically separated or not. The components illustrated as units maybe physical units or not, that is, may be located in one place, or may be distributed on a plurality of network units. According to actual requirements, all or part of the units can be selected to achieve the purpose of the implementation.

In addition, functional units in each embodiment of the present application may be integrated into a processing unit, or each unit may exist alone physically, or two or more than two units may be integrated into one unit. The integrated unit may be implemented in a form of hardware, or may be implemented in a form of a software functional unit.

It can be understood by those skilled in the art that the whole or parts of the processes of the method in the above embodiments can be realized by computer programs instructing related hardware. The computer programs are stored in a computer readable storage medium. In the embodiments of the present application, the programs can be stored in a storage medium of a computer system and executed by at least one processor in the computer system, so as to implement processes including the embodiments of the methods described above. The storage medium can be diskette, compact disc, Read-Only Memory (ROM) or Random Access Memory (RAM), and so on.

All technical features of the embodiments described above can be arbitrarily combined. In order to simplify the description, not all possible combinations of the technical features in the above embodiments are described. However, as long as these combinations of the technical features are not contradictory, these combinations should be considered to be within the scope described by the description.

The above descriptions are only several embodiments of the present application, and they are specific and detailed, but should not be understood to limit the scope of the present application. It should be noted that various deformations and improvements can be made by those skilled in the art without departing from the concept of the present application, and these deformations and improvements are all within the protection scope of the present application. Therefore the protection scope of the present application shall be subject to the appended claims.

## Claims

1. A dynamic magnetic field detection probe, **characterized by** comprising:
a dynamic magnetic field detection module, configured to acquire a magnetic signal;
a master controller module, electrically connected to the dynamic magnetic field detection module and configured to control working timing of the dynamic magnetic field detection module; and
a communication module, connected to the master controller module through communication, wherein the master controller module transmits acquired data to the communication module.

2. The dynamic magnetic field detection probe according to claim 1, **characterized in that**, the dynamic magnetic field detection module comprises a magnetic field excitation coil and a differential receiving coil;
wherein the magnetic field excitation coil conducts a pulse current, and the differential receiving coil receives a magnetic field signal at a falling edge of the pulse current.

3. The dynamic magnetic field detection probe according to claim 2, **characterized in that**,
the dynamic magnetic field excitation coil comprises a multi-layered spiral wire wound in a PCB circuit board; and
the differential receiving coil comprises forward and backward differential multi-layered spiral wires wound in a PCB circuit board.

4. The dynamic magnetic field detection probe according to claim 2, **characterized in that**, the dynamic magnetic field detection module further comprises a high frequency pulse current generator, and the high frequency pulse current generator is electrically connected to the magnetic field excitation coil, so that the magnetic field excitation coil conducts the high frequency pulse current.

5. The dynamic magnetic field detection probe according to claim 4, **characterized in that**, the high frequency pulse current generator comprises a metal-oxide-semiconductor field-effect transistor which is configured to generate the high frequency pulse current.

6. The dynamic magnetic field detection probe according to claim 1, **characterized in that**, the master controller module comprises a CPLD programmable logic device, a clock chip, a reset chip, and a JTAG program configuration interface; the clock chip, the reset chip, and the JTAG program configuration interface are electrically connected to the CPLD programmable logic device respectively.

7. The dynamic magnetic field detection probe according to claim 6, **characterized in that**, the CPLD programmable logic device comprises a timing control unit and a data transmission control unit; the timing control unit and the data transmission control unit are electrically connected to the communication module, and are configured to send timing of acquiring data to the communication module and to drive the communication module.

8. The dynamic magnetic field detection probe according to claim 1, **characterized in that**, the dynamic magnetic field detection probe further comprises a Hilbert transform module; the Hilbert transform module comprises a Hilbert transformer electrically connected to the dynamic magnetic field detection module, and is configured to perform a Hilbert transform on the magnetic signal.

9. The dynamic magnetic field detection probe according to claim 8, **characterized in that**, the Hilbert transform module further comprises:
a first low-noise amplifier provided between the Hilbert transformer and the dynamic magnetic field detection module;
a second low-noise amplifier connected to a signal output terminal of the Hilbert transformer; and
a low-pass filter provided between the Hilbert transformer and the second low-noise amplifier.

10. The dynamic magnetic field detection probe according to claim 1, **characterized in that**, the dynamic magnetic field detection probe further comprises a magnetic flux leakage detection device electrically connected to the master controller module; the magnetic flux leakage detection device is a multi-channel Hall chip array; Hall chips in each channel comprise three Hall chips arranged vertically in an X axis, a Y axis, and a Z axis, and are configured to detect spatial magnetic leakage signals.

11. An electromagnetic array control method, **characterized by** comprising:
providing a plurality of magnetic field detection probes of any one of claims 1-10; and
controlling the magnetic field detection probes via a sequential control array by a sequential control method through a control system.
